# EUROPEAN PATENT APPLICATION

(11) **EP 2 741 265 A1**
(43) Date of publication of application: **11.06.2014**
(21) Application number: 13191700.7
(22) Date of filing: 05.11.2013
(51) Int. Cl.: G08B 25/12, G06F 3/041, H04N 7/18, G08B 25/10, G08B 25/14

(54) **System and method of visual communication using touch screen**

(30) Priority: 04.12.2012 US 201213693993
(71) Applicant: Honeywell International Inc., Morristown, NJ 07962-2245 (US)
(72) Inventor: Yang, XiuKuan, Morristown, NJ New Jersey 07962-2245 (US); Ding, ZhongWei, Morristown, NJ New Jersey 07962-2245 (US); Zhu, YanChao, Morristown, NJ New Jersey 07962-2245 (US); Wei, ChunFeng, Morristown, NJ New Jersey 07962-2245 (US)
(74) Representative: Houghton, Mark Phillip

(57) **Abstract**

An apparatus is provided including a security system, an IP video door phone coupled to the security system, the IP video door phone further carries an interactive display, a gesture file that stores a two-dimensional sequence of positions, a comparison processor that detects contact by a human user with the interactive display, that compares a sequence of positions made by the contact on the interactive display with the positions of the gesture file and that detects a match; and an alarm processor that sends an alarm message to the security system upon detecting the match.

## Description

### FIELD

The field relates to security systems and more particularly to the generation of emergency alarms.

### BACKGROUND

Security systems are generally known. Such systems typically include a protected area (e.g., a building) secured via a barrier (e.g., a fence, the walls of a building, etc.) having one or more access portals (e.g., doors, windows, etc.). One or more sensors (e.g., switches) connected to an alarm panel may be provided to monitor for and detect the opening of a door or window by an intruder.

Upon detection of the opening of the door or window, the alarm panel may automatically sound a local alarm to alert the occupants of the secured area to the presence of the intruder. The alarm panel may also automatically send notification to a central monitoring station. Personnel at the central monitoring station, in turn, may dispatch the police in response to the alarm.

In most cases, a control panel may be located near one of the doors in order to conveniently arm and disarm the alarm panel. In most cases, the control panel is provided with a keypad through which an authorized person may enter an identifier and a command instructing the alarm panel to assume an armed or disarmed state.

While security systems work well, criminals have learned that users of the secured area are vulnerable to attack outside the secured area. In some cases, criminals may attack authorized persons outside the entrance to secured areas and gain entry without triggering an alarm by forcing authorized persons to disarm the security system. Accordingly, a need exists for better methods of offering protection to authorized users outside the secured area of a security system.

### BRIEF DESCRIPTION OF THE DRAWINGS

FIG. 1 is a simplified block diagram of a security system in accordance with an illustrated embodiment;

FIG. 2 is a simplified block diagram of a control panel that may be used in the security system of FIG. 1; and

FIGs. 3A-B are examples of gestures formed on the display of FIG. 2.

### DETAILED DESCRIPTION OF AN ILLUSTRATED EMBODIMENT

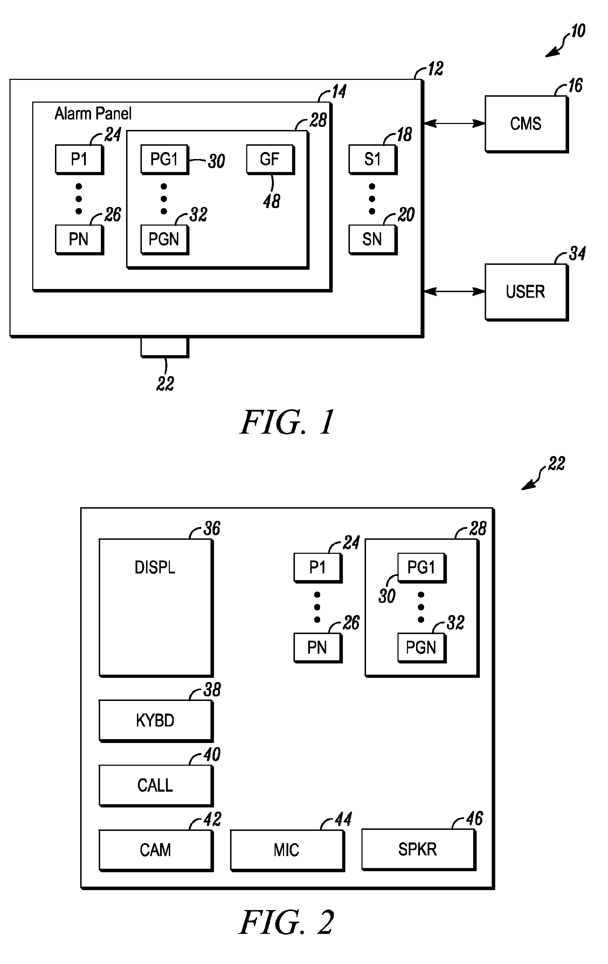

FIG. 1 depicts a security system 10 shown generally in accordance with one illustrated embodiment. Included within the security system 10 is an alarm panel 14 coupled to a number of sensors 18, 20 used to monitor a secure area 12. The sensors 18, 20 may be based upon any of a number of different technologies intended to detect intruders or other threats to the secured area 12. For example, the sensors 18, 20 may include one or more switches that detect the opening of doors or windows that provide a physical barrier around the secured area.

Alternatively, the sensors 18, 20 may include one or more closed circuit television cameras (CCTVs) used to monitor the areas around the doors or windows of the secured area 12 or other interior spaces. In the case where the sensors 18, 20 include CCTV cameras, the cameras may include motion detection capabilities to alert the alarm panel 14 to the presence of intruders.

Alternatively, or in addition, the sensors 18, 20 may also include one or more environmental sensors (e.g., smoke, gas, etc.). In this case, the security system 10 may also function as a fire alarm system.

In general, the sensors 18, 20 may be electrically connected to the panel 14 via a set of wires. Alternatively, the sensors 18, 20 (and panel 14) may be provided with a respective wireless transceiver. The wireless transceivers allow a notification including an identifier of the sensor 18, 20 and a sensed parameter (e.g., smoke, gas, open door on a perimeter, motion, etc.) to be wirelessly transmitted by the sensor to the panel 14 and for the panel 14 to acknowledge receipt of the notification.

Upon receipt of a notification from one of the sensors 18, 20, the alarm panel 14 may compose an alarm message and send the message to a central monitoring station 16. The alarm message may include an identifier of the alarm panel 14 (e.g., an address, account number, etc.) and an identifier and location of the sensor 18, 20.

As shown in FIG. 1, the security system 10 also includes one or more control panels 22 that operates as a human interface and that allows a user to interact with the security system 10. Under one particular embodiment, the control panel 22 is an IP video door phone. The control panel 22 may exchange messages with the alarm panel 14 via wires (e.g., an Ethernet connection) or via a pair of wireless transceivers.

In general, the alarm panel 14 and control panel 22 may each operate under control of control circuitry including one or more processors 24, 26 (e.g., made by Intel). The processors 24, 26, in turn, operate under control of one or more computer programs 30, 32 loaded from a non-transitory computer readable medium (memory) 28. As used herein, reference to the processor apparatus (i.e., processor 24, 26) is also a reference to the software program 30, 32 executing on the processor 24, 26.

FIG. 2 is a block diagram of the control panel 22. In this regard, a user may interact with the security system 10 through an interactive display 36 carried by the control panel 22.

In the case where the control panel 22 is located outside the secure area 12, the control panel 22 may also carry a call button 38, a camera 42 and a microphone 44. The call button 38 may be a separate pushbutton as shown in FIG. 2, may be one key on a keyboard 38 or may be an icon displayed on the interactive display 36.

The call button 40 is very useful in the case of the control panel 22 located outside the secure area 12 because visitors may use the call button 40 in a manner similar to a door bell to gain access to the secure area 12. In this context, a communication processor 24, 26 may set up an audio connection or an audio/video connection between the visitor proximate the control panel 22 and a user device (e.g., an I-phone) 34 of an authorized user of the secured area 12. The user may confirm the identity of the visitor through the user device 34 and grant access to the secure area 12 by remotely activating a lock on a door via the user device 34 thereby allowing the visitor entry into the secure area 12.

In this regard, the communication processor 24, 26 may set up a point-to-point TCP/IP connection between a microphone 44 and speaker 46 of the control panel 22 and the user 34. In this regard, the communication processor 24, 26 may use an appropriate signaling protocol (e.g., H.323/SIP) to locate the user 34 and an appropriate codec (e.g., G.711, SD, H.264/MPEG4) to exchange voice or audio/video between the control panel 22 and user device 34.

The control panel 22 may also be used to receive covert indications of duress. For example, an authorized user may register a two-dimensional gesture (detectable through the interactive display 36) that may later be used to trigger an ambush alarm.

Under one illustrated embodiment, the user may register the gesture by accessing a set up utility available through a gesture processor 24, 26 during a training session. This may be performed by entry of a personal identifier and setup command through the keyboard 38 or through an icon displayed on the interactive display 36.

Once the set up utility has been accessed, the gesture processor 24, 26 may receive a sequence of positions (during a training session) defining a specific gesture that is later used to indicate distress. The sequence of positions may be saved and later used to detect a covert instruction from the user to the security panel 14 instructing the security panel 14 to send an alarm message to the central monitoring station 16.

During the training session, the authorized user may touch and move one or more fingers across the surface of the interactive display 36 (thereby forming a moving contact) that defines a unique gesture. In this regard, the gesture processor 24, 26 may detect the instantaneous positions of the user's finger(s) and form a sequence of positions where each position is defined by a set of coordinate values (e.g., x and y coordinates) and a time value that the moving contact was detected at each of the coordinates. The instantaneous set of coordinates may be detected by the gesture processor directly or by a separate coordinate processor 24, 26 that detects the coordinates via changes in capacitance or resistance resulting from contact by the user with the surface of the interactive display 36.

As each set of coordinates are received, they are saved in a gesture file 48 within memory 28 either as absolute values or as offset values from an initial position. The time value associated with each set of coordinates may also be saved as an absolute value or as a time offset from an initial position or the previous position of the sequence of positions.

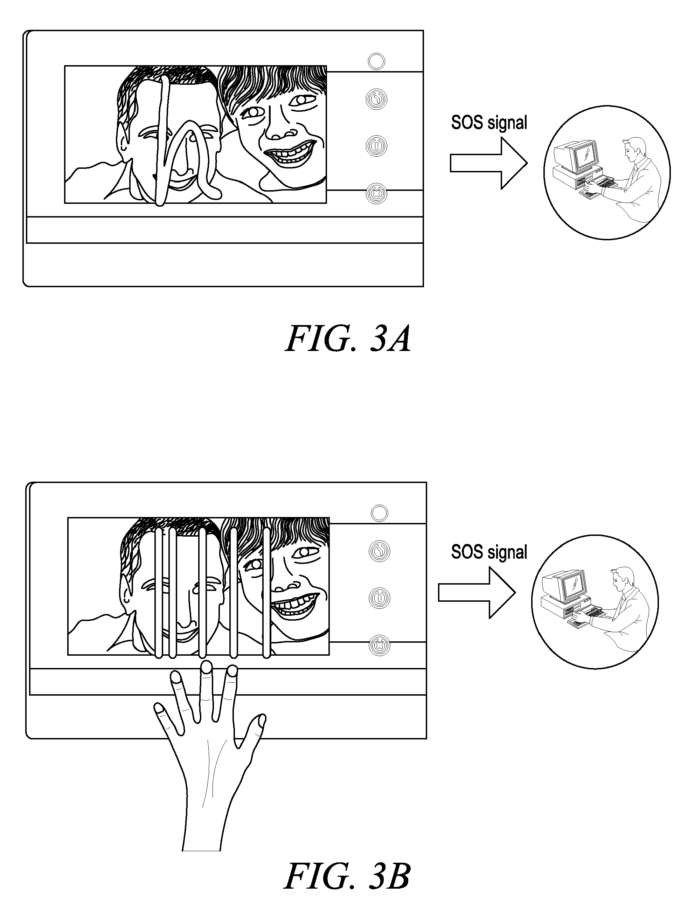

FIGs. 3A-B show two examples of gestures (i.e., sequences of coordinates) that may be saved into a gesture file 48 and later used as an indication of an ambush. In FIG. 3A, the user has traced the outline of a lowercase "h" with one finger. In FIG. 3B, the user has traced five parallel lines using five respective fingers on one hand.

It should be noted in this regard that where the user records a gesture using more than one finger, the gesture file 48 may also include a respective sequence of coordinates for each finger. In this regard, the file 48 may include an additional one or more sets of respective coordinates that relate each sequence of coordinates with the other sequences of coordinates within the file 48. This additional set (or sets) of coordinates may be provided as a relative spacing between the respective sequences of coordinates. This may be done on a point by point basis or may be provided as an overall spacing that separates parallel lines as shown in FIG. 3B.

Once a gesture file 48 has been saved, the gesture processor 24, 26 continually monitors the interactive screen 36 for contact made by the finger(s) of any user with the surface of the interactive display 36. Upon detecting a contact, the gesture processor or a separate comparison processor 24, 26 may collect a sequence of coordinates of positions over some predetermined time period for each moving contact. As each sequence of positions is collected, they are compared with the contents of the gesture file 48. In this case, comparison may mean attempting to match the collected positions with the entirety of a saved sequence of positions or a portion thereof. Where a match is found with some portion of the gesture file 48, the processor may save the location of the match and continue to match the remainder of the gesture file 48.

As part of the matching process, a scaling processor 24, 26 may operate to expand and/or contract each collected sequence of coordinates in order to better obtain a match between collected and saved sequences of positions. The scaling processor 24, 26 may operate on the individual sequences of coordinates (where only one moving contact is detected) or over multiple sequences of contacts (where a user uses multiple fingers simultaneously in order to create a move complex gesture).

As a part of the gesture file 48, the gesture processor 24, 26 may also incorporate a set of error parameters used in the matching process. Error parameters may include a variation in time over which the gesture may be made and an overall dimensional error or tilt in the relative coordinates of the sequence of positions. These values may be expressed as a percentage of desired values or as absolute values.

As indicated in FIGs. 3A-B the processing of collected sequence of positions are continuously compared with the saved sequence of positions. Where a match is detected, an indication of the match is sent to an alarm processor 24, 26 of the alarm panel 14. The alarm processor 24, 26 may, in turn, compose an ambush alarm message that is sent to the central monitoring station 16 as shown in FIGs. 3A-B.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. An apparatus comprising:
a security system;
an IP video door phone coupled to the security system;
an interactive display carried by the IP video door phone;
a gesture file that stores a two-dimensional sequence of positions;
a comparison processor that detects contact by a human user with the interactive display, that compares a sequence of positions made by the contact on the interactive display with the positions of the gesture file and that detects a match; and
an alarm processor that sends an alarm message to the security system upon detecting the match.

2. The apparatus as in claim 1 wherein the alarm message further comprises an ambush alarm.

3. The apparatus as in claim 1 wherein the alarm message to the security system further comprises an alarm message to a central monitoring station.

4. The apparatus as in claim 1 wherein the contact detected by the comparison processor further comprises a single point of contact with the interactive display defined by a single finger of the human user.

5. The apparatus as in claim 1 wherein the comparison processor detects a plurality of contacts with the interactive display defined by a corresponding number of fingers of the human user.

6. The apparatus as in claim 5 wherein the gesture file further comprises a two-dimensional sequence of positions for each of the plurality of contacts.

7. The apparatus as in claim 6 wherein the gesture file further comprises a predetermined spacing that separates the plurality of contacts.

8. An apparatus comprising:
an IP video door phone having an interactive display;
a gesture file within a non-transient computer readable medium that stores a two-dimensional sequence of positions;
a comparison processor that detects a moving contact caused by contact by a human user with the interactive display, that compares a sequence of positions made by the moving contact on the interactive display with the positions of the gesture file and that detects a match; and
an alarm processor that transmits an alarm message upon detecting the match.

9. The apparatus as in claim 8 further comprising a security system.

10. The apparatus as in claim 9 wherein the security system further comprises the alarm processor and wherein the alarm processor transmits the alarm message to a central monitoring station.

11. The apparatus as in claim 8 wherein the gesture file further comprises a predetermined respective time period between successive positions of the two-dimensional sequence of positions.

12. The apparatus as in claim 8 wherein the moving contact further comprises a single moving contact.

13. The apparatus as in claim 8 wherein the moving contact further comprises a plurality of moving contacts.

14. The apparatus as in claim 13 wherein the gesture file further comprises a plurality of sequences of positions with each of the plurality of sequences of positions corresponding to a respective one of the plurality of moving contacts.

15. The apparatus as in claim 14 wherein the gesture file further comprises a respective predetermined distance that separates each of the plurality of moving contacts.
